# EUROPÄISCHE PATENTSCHRIFT

(11) **EP 4 014 704 B1**
(45) Veröffentlichungstag und Bekanntmachung des Hinweises auf die Patenterteilung: **03.05.2023**
(21) Anmeldenummer: 20214376.4
(22) Anmeldetag: 15.12.2020
(51) Int. Cl.: A01B 59/041, A01B 59/00

(54) **STABILISATOR**
STABILIZER
STABILISATEUR

(43) Veröffentlichungstag der Anmeldung: 22.06.2022
(73) Patentinhaber: Walterscheid GmbH, 53797 Lohmar (DE)
(72) Erfinder: SCHMACKE, Jan-Philipp, 53797 Lohmar (DE); THIEL, Manuel, 51570 Windeck-Herchen (DE)
(74) Vertreter: Neumann Müller Oberwalleney Patentanwälte PartG mbB

(56) Entgegenhaltungen:
- EP-A1- 1 671 527
- DE-A1- 2 737 169
- DE-A1- 3 505 243
- DE-C1- 19 744 328

## Beschreibung

Die Erfindung betrifft einen Stabilisator für eine Anbauvorrichtung eines Fahrzeugs, der ein erstes Stellelement und ein zweites Stellelement, die zur Längenveränderung des Stabilisators entlang einer Längsachse verstellbar zueinander geführt sind, ein erstes Verbindungselement am ersten Stellelement zum Abstützen des Stabilisators gegen das Fahrzeug, und ein zweites Verbindungselement zum Abstützen des Stabilisators gegen ein Element der Anbauvorrichtung aufweist. Das zweite Verbindungselement ist zur Längeneinstellung des zweiten Stellelements axial verstellbar am zweiten Stellelement gehalten und zumindest in einer verlängernden Position und in einer verkürzenden Position am zweiten Stellelement fixierbar.

Ein solcher Stabilisator ist zum Beispiel aus der DE 43 10 027 C1 bekannt. Die beiden Stellelemente sind hierbei als Teleskopglieder ausgebildet und zueinander teleskopierend geführt. Sowohl in einer maximal zusammengefahrenen Stellung als auch in einer maximal auseinandergefahrenen Stellung des ersten Stellelements und des zweiten Stellelements zueinander, ist das erste Stellelement gegen das zweite Stellelement axial abgestützt. Ein weiterer Stabilisator aus dem Stand der Technik gemäß dem Oberbegriff des Anspruchs 1 ist aus der DE 35 05 243 A1 bekannt.

Um den Schwimmweg des Stabilisators zwischen der maximal zusammengefahrenen Stellung und der maximal auseinandergefahrenen Stellung zu begrenzen und des Weiteren das erste Stellelement und das zweite Stellelement zueinander fixieren zu können, ist eine Sperrklinke vorgesehen, die schwenkbar an dem ersten Stellelement befestigt ist. Die Sperrklinke weist zwei Wangen auf, die in einer Sperrstellung der Sperrklinke das zweite Stellelement zwischen sich aufnehmen. Die Wangen weisen jeweils eine Riegelausnehmung auf, die einen ersten Abschnitt und einen zweiten Abschnitt umfasst, wobei der erste Abschnitt in Längsrichtung des Stabilisators kürzer ausgebildet ist, als der zweite Abschnitt. In der Sperrstellung der Sperrklinke sind Riegelanschläge, die seitlich von dem zweiten Stellelement radial vorstehen, in dem ersten Abschnitt der Riegelausnehmungen aufgenommen. Hierdurch stützt sich das zweite Stellelement über die Riegelanschläge und die Sperrklinke gegen das erste Stellelement axial ab. Da die Riegelanschläge in etwa dieselbe axiale Länge aufweisen, wie der erste Abschnitt der Riegelausnehmungen, sind das erste Stellelement und das zweite Stellelement zueinander axial fixiert. In einer Schwimmwegbegrenzungsstellung der Sperrklinke sind die Riegelanschläge jeweils in dem zweiten Abschnitt der Riegelausnehmungen aufgenommen, wobei der zweite Abschnitt in axialer Richtung länger ausgebildet ist als der erste Abschnitt und somit auch länger ausgebildet ist als der jeweilige Riegelanschlag. Somit können die Riegelanschläge bei einem axialen Verstellen des zweiten Stellelements gegenüber dem ersten Stellelement begrenzt innerhalb des zweiten Abschnitts der Riegelausnehmungen verstellt werden. Hierdurch ist eine Schwimmwegbegrenzung gewährleistet, wobei der begrenzte Schwimmweg kleiner ist als der maximale Schwimmweg, der sich ergibt, wenn die Sperrklinke in eine Schwimmstellung überführt ist.

Zur Längeneinstellung des Stabilisators an unterschiedliche Anbaugeräte, die über die Anbauvorrichtung mit dem Fahrzeug verbunden werden sollen, kann das zweite Verbindungselement in unterschiedlichen axialen Positionen am zweiten Stellelement gehalten bzw. fixiert werden. Üblicherweise weist hierzu das zweite Verbindungselement einen Gewindeschaft auf, der in eine Gewindebohrung des zweiten Stellelements eingeschraubt werden kann. Somit lässt sich der Stabilisator an unterschiedliche Kategorien bezüglich der Breite der Anbaugeräte anpassen. Bei breiten Anbaugeräten kann der Schwimmweg begrenzt werden, sodass dieser geringer ist als der Schwimmweg bei schmalen Anbaugeräten. Dadurch wird vermieden, dass bei einer seitlichen Bewegung das breitere Anbaugeräte mit Bauteilen des Fahrzeugs, wie zum Beispiel mit Hinterrädern eines Traktors, kollidiert.

Aufgabe der vorliegenden Erfindung ist es, einen Stabilisator bereitzustellen, der eine einfache Schwimmwegbegrenzung ermöglicht.

Die Aufgabe wird durch einen Stabilisator für eine Anbauvorrichtung eines Fahrzeugs gelöst, der ein erstes Stellelement und ein zweites Stellelement, die zur Längenveränderung des Stabilisators entlang einer Längsachse verstellbar zueinander geführt sind, ein erstes Verbindungselement am ersten Stellelement zum Abstützen des Stabilisators gegen das Fahrzeug, und ein zweites Verbindungselement zum Abstützen des Stabilisators gegen ein Element der Anbauvorrichtung aufweist. Das zweite Verbindungselement ist zur Längeneinstellung des zweiten Stellelements axial verstellbar am zweiten Stellelement gehalten und zumindest in einer verlängernden Position und in einer verkürzenden Position am zweiten Stellelement fixierbar. Hierbei ist, in einer maximal zusammengefahrenen Stellung des ersten Stellelements und des zweiten Stellelements zueinander und in der verlängernden Position des zweiten Verbindungselements, das erste Stellelement gegen das zweite Verbindungselement oder das zweite Stellelement axial abgestützt. Ferner ist, in der maximal zusammengefahrenen Stellung des ersten Stellelements und des zweiten Stellelements zueinander und in der verkürzenden Position des zweiten Verbindungselements, das erste Stellelement gegen das zweite Verbindungselement axial abgestützt.

Dadurch, dass in der maximal zusammengefahrenen Stellung des ersten Stellelements und des zweiten Stellelements zueinander und in der verkürzenden Position des zweiten Verbindungselements, das erste Stellelement gegen das zweite Verbindungselement axial abgestützt ist, ist die maximal zusammengefahrene Stellung von der Stellung des zweiten Verbindungselements relativ zum zweiten Stellelement abhängig. Die Position des zweiten Verbindungselements relativ zum zweiten Stellelement ist wiederum von der geforderten Längeneinstellung des Stabilisators und damit von der Kategorie bezüglich der Breite des anzubauenden Anbaugeräts abhängig. Somit ergibt sich automatisch bei Einstellung der Länge des Stabilisators auf eine bestimmte Kategorie des Anbaugeräts einer Einstellung der Länge des Schwimmweges. Da zur Aufnahme eines breiteren Anbaugeräts die Länge des Stabilisators reduziert wird, wird das zweite Verbindungselement in eine verkürzende Position überführt, sodass dieses früher mit dem ersten Stellelement bei einer Verstellung gegenüber dem zweiten Verstellelement in Anlage kommt. Dadurch ist der Schwimmweg gegenüber einer verlängernden Position des zweiten Verbindungselements reduziert.

Gemäß einem Ausführungsbeispiel weist das zweite Stellelement eine Führungsaufnahme auf, in der ein Führungsabschnitt des ersten Stellelements axial verstellbar geführt ist. Das erste Stellelement und das zweite Stellelement sind teleskopierend zueinander geführt, indem das zweite Stellelement in die Führungsaufnahme des ersten Stellelements eintaucht.

Darüber hinaus kann das zweite Stellelement eine Verstellaufnahme aufweisen, in der ein Schaft des zweiten Verbindungselements axial verstellbar aufgenommen ist, wobei die Verstellaufnahme in die Führungsaufnahme übergeht. In der verkürzenden Position des zweiten Verbindungselements taucht dieses weiter in die Verstellaufnahme ein, als in einer verlängernden Position. Darüber hinaus taucht der Schaft des zweiten Verbindungselements in die Führungsaufnahme des zweiten Stellelements ein.

Der Schaft des zweiten Verbindungselements kann somit in der verkürzenden Position des zweiten Verbindungselements in die Führungsaufnahme hineinragen, wobei, in der maximal zusammengefahrenen Stellung des ersten Stellelements und des zweiten Stellelements zueinander, der Führungsabschnitt des ersten Stellelements axial gegen den Schaft des zweiten Verbindungselements abgestützt ist.

Der Schaft und die Verstellaufnahme können zusammen eine Schraubverbindung bilden. Der Schaft kann als Gewindeschaft mit einem Außengewinde ausgebildet sein, der in ein Innengewinde der Verstellaufnahme eingeschraubt wird.

Es kann eine Feder oder eine Federanordnung vorgesehen sein, sodass das erste Stellelement und das zweite Stellelement ausgehend von einer Ausgangsstellung in Richtung zur maximal zusammengefahrenen Stellung entgegen der Kraft der Feder verstellbar sind.

Ferner kann eine Feder oder eine Federanordnung vorgesehen sein, sodass das erste Stellelement und das zweite Stellelement ausgehend von einer Ausgangsstellung in Richtung zu einer maximal auseinandergefahrenen Stellung entgegen der Kraft einer Feder verstellbar sind.

Die Feder oder die Federanordnung zur Erzeugung einer Kraft beim Verstellen in Richtung zur maximal zusammengefahrenen Stellung kann hierbei dieselbe Feder bzw. Federanordnung zur Erzeugung einer Kraft beim Verstellen in Richtung zur maximal auseinandergefahrenen Stellung sein.

Gemäß einer Ausführungsform des Stabilisators ist das zweite Verbindungselement zur Längenveränderung des zweiten Stellelements mit dem zweiten Stellelement über eine Schraubverbindung um die Längsachse drehbar verbunden.

Der Stabilisator kann hierbei ferner eine Arretiereinrichtung aufweisen, die mit dem zweiten Stellelement und dem zweiten Verbindungselement verbunden ist, wobei in einer Arretierstellung der Arretiereinrichtung das zweite Stellelement und das zweite Verbindungselement drehfest miteinander verbunden sind.

Dadurch, dass die Arretiereinrichtung mit dem zweiten Stellelement und dem zweiten Verbindungselement verbunden ist, ist zum einen sichergestellt, dass das zweite Stellelement in der Arretierstellung nicht gegenüber dem zweiten Verbindungselement gedreht werden kann. Zum anderen ist sichergestellt, dass die Arretiereinrichtung an zwei Elementen, nämlich dem zweiten Stellelement und dem zweiten Verbindungselement, befestigt ist, die bei einer Bewegung der beiden Stellelemente zueinander nicht relativ zueinander bewegt werden. Hierdurch wird Verschleiß an der Arretiereinrichtung vermieden.

In einer beispielhaften Ausführungsform des Stabilisators weist die Arretiereinrichtung einen Bügel auf, der verstellbar, insbesondere schwenkbar, mit einem der beiden Elemente der Gruppe bestehend aus zweitem Stellelement und zweitem Verbindungselement schwenkbar verbunden ist. Ferner weist die Arretiereinrichtung ein Arretierelement auf, das an dem anderen der beiden Elemente der Gruppe bestehend aus zweitem Stellelement und zweitem Verbindungselement befestigt ist. In der Arretierstellung der Arretiereinrichtung ist der Bügel, im Drehsinn um die Längsachse, gegen das Arretierelement abgestützt.

Das Arretierelement kann hierbei einen Schlitz aufweisen, wobei der Bügel in der Arretierstellung der Arretiereinrichtung parallel zur Längsachse ausgerichtet ist und in den Schlitz des Arretierelements eingreift.

Der Stabilisator kann ferner eine Sperrklinke aufweisen, die mit einem der beiden Elemente der Gruppe bestehend aus erstem Stellelement und zweitem Stellelement verstellbar verbunden ist. Der Stabilisator kann zudem zumindest ein Sperrelement aufweisen, das mit dem anderen der beiden Elemente der Gruppe bestehend aus erstem Stellelement und zweitem Stellelement verbunden ist. Die Sperrklinke ist in eine Sperrstellung überführbar, in der das erste Stellelement und das zweite Stellelement zumindest in axiale Richtung der Längsachse gegeneinander abgestützt sind.

Hierbei kann das zumindest eine Sperrelement das Arretierelement sein.

Der Bügel kann starr ausgebildet sein oder elastisch federnd, zum Beispiel in Form eines Federbügels.

Der Stabilisator kann einerseits als rein mechanischer Stabilisator ausgebildet sein oder auch als hydraulisch betätigter Stabilisator, wobei in letzterem Fall das erste Stellelement einen Hydraulikzylinder, insbesondere einen einfach wirkenden Hydraulikzylinder, der zum Ausfahren mit Hydraulikdruck beaufschlagbar ist, umfasst.

Beispielhafte Ausführungsformen der Erfindung werden im Folgenden anhand der Figuren näher erläutert. Hierin zeigen
- Figur 1: einen Traktor mit einer Dreipunktanbauvorrichtung,
- Figur 2: eine schematische Draufsicht der Unterlenker der Dreipunktanbauvorrichtung gemäß Figur 1 mit Stabilisatoren zur Stabilisierung der Unterlenker,
- Figur 3: eine perspektivische Ansicht eines Stabilisators, der auf Zug und Druck gesperrt werden kann, mit einem zweiten Verbindungselement in einer verkürzenden Position,
- Figur 4: eine perspektivische Ansicht des Stabilisators gemäß Figur 3 mit dem zweiten Verbindungselement in einer verlängernden Position,
- Figur 5: eine perspektivische Ansicht des Stabilisators gemäß Figur 3 mit einer Sperrklinke in einer Schwimmstellung,
- Figur 6: eine perspektivische Ansicht des Stabilisators gemäß Figur 3 mit einem Bügel einer Arretiereinrichtung in einer Freigabestellung,
- Figur 7: einen Teillängsschnitt des Stabilisators gemäß Figur 3 in einer Ausgangsstellung und mit dem zweiten Verbindungselement in der verlängernden Position,
- Figur 8: einen Teillängsschnitt des Stabilisators gemäß Figur 3 in einer maximal zusammengefahrenen Stellung und mit dem zweiten Verbindungselement in der verlängernden Position,
- Figur 9: einen Teillängsschnitt des Stabilisators gemäß Figur 3 in einer maximal zusammengefahrenen Stellung und mit dem zweiten Verbindungselement in der verkürzenden Position und
- Figur 10: eine perspektivische Ansicht einer weiteren Ausführungsform eines Stabilisators, der nur auf Druck gesperrt werden kann und mit einem Bügel der Arretiereinrichtung, der an einem Bolzen einer Befestigungsgabel des zweiten Verbindungselements schwenkbar befestigt ist.

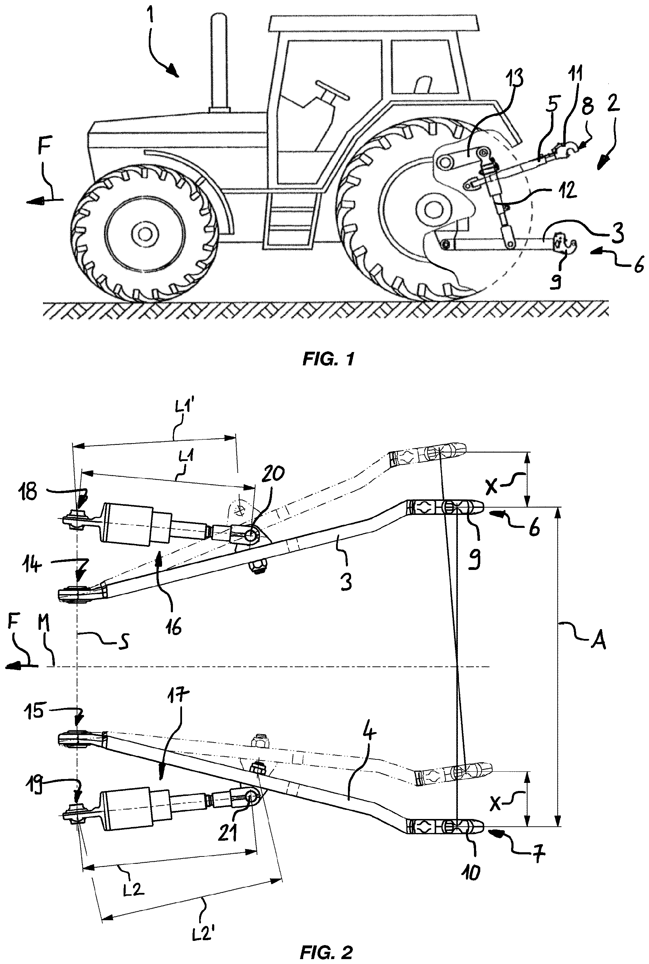

Aus der Figur 1 ist ein Fahrzeug, insbesondere eine Landmaschine in Form eines Traktor 1 mit einer an seinem Heck angeordneten Anbauvorrichtung in Form einer Dreipunktanbauvorrichtung 2 mit zwei Unterlenkern, von denen ein Unterlenker 3 in Figur 1 sichtbar ist, und einem Oberlenker 5, ersichtlich. Der Unterlenker 3 ist an einem Ende schwenkbar am Traktor 1 befestigt. Zusätzlich zu dem sichtbaren Unterlenker 3 ist ein weiterer Unterlenker 4 (Figur 2) angebracht. Oberhalb und zwischen diesen beiden Unterlenkern 3, 4 ist der Oberlenker 5 mit einem Ende am Heck des Traktors 1 schwenkbar angelenkt. Die Unterlenker 3, 4 und der Oberlenker 5 dienen zur Anbringung eines nicht dargestellten Anbaugerätes an den Traktor 1. Hierzu sind an freien Enden 6, 7 der Unterlenker 3, 4 und an einem freien Ende 8 des Oberlenkers 5 Kupplungshaken 9, 10, 11 befestigt, die dazu dienen, Kupplungselemente des Anbaugeräts aufzunehmen.

Zum vertikalen Anheben und Absenken des anzuhängenden Anbaugerätes ist der Unterlenker 3 mittels einer Hubstrebe 12 an einen Hubarm 13 angelenkt. Der Hubarm 13 ist mit einem Kraftantrieb (nicht dargestellt) verbunden, über den der Hubarm 13 heb- und senkbar ist. Über die Hubstrebe 12 wird damit auch der Unterlenker 3 gehoben oder gesenkt. Der in Figur 1 nicht sichtbare Unterlenker 4 ist in identischer Weise mit einer weiteren Hubstange und einem weiteren Hubarm verbunden.

Figur 2 zeigt eine Draufsicht auf die beiden Unterlenker 3, 4, welche um eine Schwenkachse S an Befestigungsstellen 14, 15 am Heck des Traktors 1 schwenkbar angeordnet sind. Die beiden Befestigungsstellen 14, 15 sind mit gleichem Abstand seitlich zu einer Traktorlängsachse M versetzt angeordnet. Die beiden Unterlenker 3, 4 können sowohl Seitenbewegungen als auch Hubbewegungen ausführen. Die Unterlenker 3, 4 sind mit durchgezogenen Linien in einer zentrierten Mittenstellung dargestellt, in der die Unterlenker 3, 4 spiegelsymmetrisch zur Traktorlängsachse M angeordnet sind, sodass die Kupplungshaken 9, 10 der Unterlenker 3, 4 im gleichen Abstand zur Traktorlängsachse M angeordnet sind.

Die Unterlenker 3, 4 können aus der zentrierten Mittenstellung in seitlicher Richtung jeweils um eine Achse, die senkrecht zur Schwenkachse S und zur Traktorlängsachse M angeordnet ist, geschwenkt werden. In Figur 2 sind die Unterlenker 3, 4 in einer beispielhaften verschwenkten Seitenstellung in gestrichelten Linien dargestellt. Hierbei sind die Kupplungshaken 9, 10 der Unterlenker 3, 4 bezogen auf die Mittenstellung seitlich um das Maß X versetzt.

Zur Stabilisierung, d.h. zur Verhinderung von seitlichen Bewegungen der beiden Unterlenker 3, 4, sind mit diesen jeweils Stabilisatoren 16, 17 verbunden. Die beiden Stabilisatoren 16, 17 sind jeweils mit einem Ende mittels erster Anschlussmittel 18, 19 seitlich versetzt zu den Befestigungsstellen 14, 15 der Unterlenker 3, 4 an entsprechenden, zur Schwenkachse S zentrierten Befestigungsmitteln am Heck des Traktors 1 festgelegt. Mittels an den anderen Enden der Stabilisatoren 16, 17 vorgesehenen zweiten Anschlussmitteln 20, 21 sind die Stabilisatoren 16, 17 jeweils mit einem der Unterlenker 3, 4 verbunden.

Tritt bei angehängtem Anbaugerät eine Seitenbewegung an den Unterlenkern 3, 4 auf, findet eine Verlagerung der beiden Unterlenker 3, 4 zum Beispiel von der in durchgezogenen Linien dargestellten Mittenstellung zu der in gestrichelten Linien dargestellten Seitenstellung statt. Dabei verändern sich die Längen L1, L2 der beiden Stabilisatoren 16, 17, wobei die Längen L1, L2 den Abständen zwischen den ersten Anschlussmitteln 18, 19 und den zweiten Anschlussmitteln 20, 21 entsprechen. Die Länge L1 des Stabilisators 16 am in Fahrtrichtung F betrachtet rechten Unterlenker 3 verkürzt sich von dem Maß L1 auf L1'. Die Länge L2 des Stabilisators 17 am in Fahrtrichtung F betrachtet linken Unterlenker 4 verlängert sich vom Maß L2 auf L2'. Dabei sind die Längenänderungen der beiden Stabilisatoren 16, 17 unterschiedlich.

Beim Schwenken der Unterlenker 3, 4 um die Befestigungsstellen 14, 15 im entgegengesetzten Sinne als in Figur 2 dargestellt, würde entsprechend die Länge L1 verlängert und die Länge L2 verkürzt.

Durch eine konstruktive Festlegung der Stabilisatoren 16, 17 hinsichtlich der maximalen Verkürzung wird durch die Stabilisatoren 16, 17 gewährleistet, dass die Unterlenker 3, 4 in einer maximalen Seitenstellung (zum Beispiel gemäß der gestrichelt dargestellten Stellung in Figur 2) nicht gegen Hinterräder des Traktors 1 anschlagen. Ferner dienen die beiden Stabilisatoren 16, 17 dazu, ein angehängtes Anbaugerät auf der Traktorlängsachse M zentriert halten zu können, wenn sich die Dreipunktanbauvorrichtung 2 beispielsweise in einem angehobenen Transportzustand befindet. Gleiches gilt auch dann, wenn kein Anbaugerät angehängt ist und die Unterlenker 3, 4 sich in einer Transportposition befinden. Die beiden Stabilisatoren 16, 17 sorgen in diesem Zustand dafür, dass die Unterlenker 3, 4 so gehalten werden, dass sie sich seitlich nicht in dem eingestellten Spreizmaß A von der Traktorlängsachse M nach außen bewegen können. Das Spreizmaß A zwischen den Kupplungshaken 9, 10 der beiden Unterlenker 3, 4 kann durch in die Stabilisatoren 16, 17 integrierte Teleskopverstellungen, die von Hand einstellbar sind, eingestellt werden, wenn Anbaugeräte mit einer von der jeweils eingestellten Kategorie abweichenden Kategorie gekuppelt werden sollen.

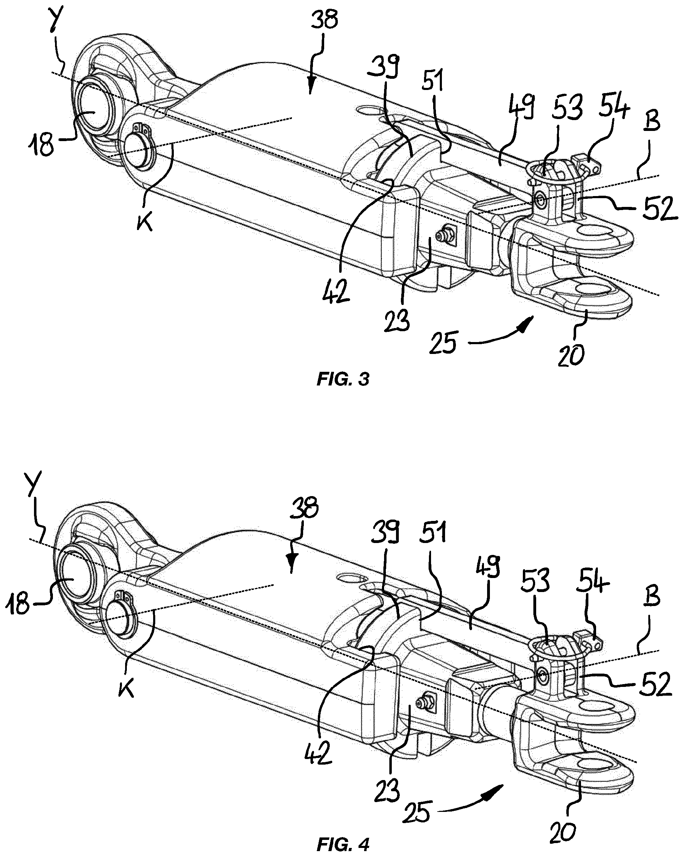

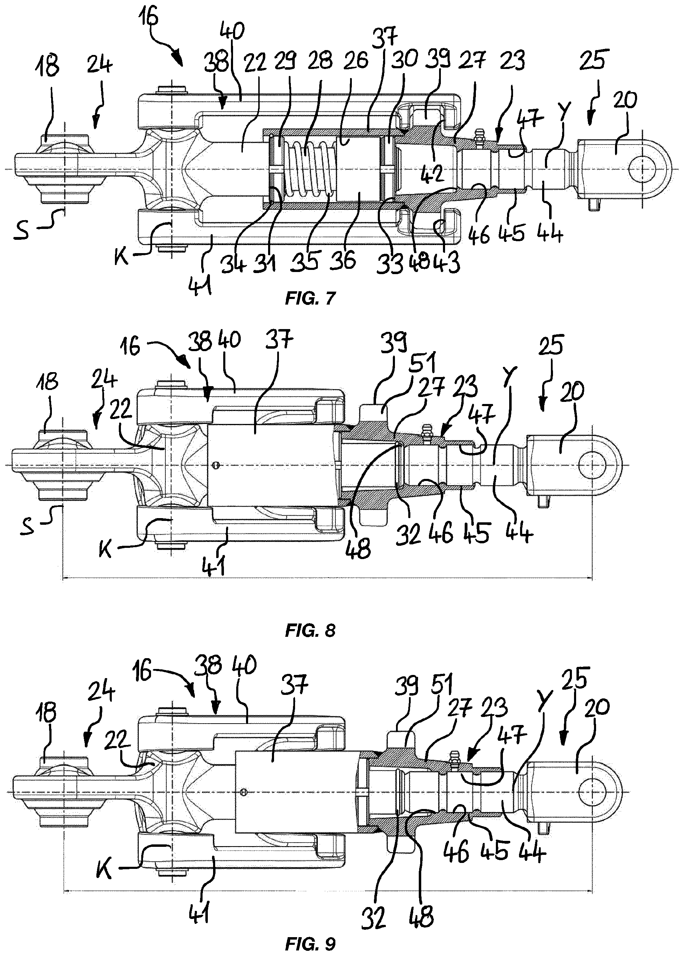

Die Figuren 3 bis 6 zeigen den Stabilisator 16 am rechten Unterlenker 3 gemäß Figur 2, wobei der Stabilisator 17 am linken Unterlenker 4 identisch aufgebaut sein kann, in unterschiedlichen Stellungen. Die Figuren 7 bis 9 zeigen den Stabilisator 16 in einem Teillängsschnitt ebenfalls in unterschiedlichen Stellungen. Die Figuren 3 bis 9 werden im Folgenden zusammen beschrieben.

Der Stabilisator 16 weist ein erstes Stellelement 22 und ein zweites Stellelement 23 auf, die für eine Längenveränderung des Stabilisators 16 entlang einer Längsachse Y des Stabilisators 16 verstellbar zueinander geführt sind.

Zum Abstützen des Stabilisators 16 gegen den Traktor bzw. zum Befestigen des Stabilisators 16 am Traktor ist an dem ersten Stellelement 22 ein erstes Verbindungselement 24 mit den ersten Anschlussmitteln 18, hier in Form eines Kugelgelenks, angeordnet. Das erste Verbindungselement 24 ist hierbei integraler Bestandteil des ersten Stellelements 22, kann jedoch auch als separates Bauteil ausgebildet sein, das mit dem ersten Stellelement 22 verbunden ist.

Der Stabilisator 16 weist ferner ein zweites Verbindungselement 25 auf, das mit dem zweiten Stellelement 23 verbunden ist und zum Abstützen bzw. zum Befestigen des Stabilisators 16 an einem Unterlenker der Anbauvorrichtung dient. Das zweite Verbindungselement 25 weist die zweiten Anschlussmittel 20, hier in Form einer Befestigungsgabel, auf. Das zweite Verbindungselement 25 ist entlang der Längsachse Y axial verstellbar am zweiten Stellelement 23 über eine Schraubverbindung, die nach folgend noch näher erläutert wird, befestigt.

Zur Führung des ersten Stellelements 22 relativ zum zweiten Stellelement 23 und damit zur Längenveränderung des Stabilisators 16 umfasst das erste Stellelement 23 eine Führungsaufnahme 26, die durch ein Rohr 37 gebildet ist. Das Rohr 37 ist mit einem Grundkörper 27 des zweiten Stellelements 23 koaxial zur Längsachse Y verschweißt, wobei die Führungsaufnahme 26 des Rohrs 37 in Richtung zum ersten Verbindungselement 24 offen ist. In der Führungsaufnahme 26 ist ein Führungsabschnitt 28 des ersten Stellelements 22 axial verstellbar geführt.

Hierzu sitzen auf dem Führungsabschnitt 28 des ersten Stellelements 22 ein hinterer Druckring 29 und ein vorderer Druckring 30, die auf dem Führungsabschnitt 28 verschiebbar geführt sind. In einer Ausgangsstellung des ersten Stellelements 22 und des zweiten Stellelements 23 zueinander (Figur 7) ist der hintere Druckring 29 gegen eine Schulter 31 des ersten Stellelements 22 in Richtung zum ersten Verbindungselement 24 axial abgestützt. Der vordere Druckring 30 ist gegen einen Sicherungsring 32 am Führungsabschnitt 28 des ersten Stellelements 22 in Richtung zum zweiten Verbindungselement 25 axial abgestützt. Ferner ist der vordere Druckring 30 axial in Richtung zum zweiten Verbindungselement 25 gegen eine Schulter 33 des zweiten Stellelements 23 axial abgestützt und der hintere Druckring 29 gegen einen Sicherungsring 34 des zweiten Stellelements 23 in Richtung zum ersten Verbindungselement 24 axial abgestützt. Die beiden Druckringe 29, 30 sind über eine Feder oder Federanordnung, hier eine Druckfeder 35, gegeneinander abgestützt, wobei die Druckfeder 35 als Schraubenfeder ausgebildet ist und koaxial zur Längsachse Y auf dem Führungsabschnitt 28 des ersten Stellelements 22 sitzt.

Zwischen den beiden Druckringen 29, 30 ist ferner eine Hülse 36 angeordnet, gegen welche sich die Druckringe 29, 30 axial abstützen können und die um die Druckfeder 35 angeordnet ist. Die axiale Länge der Hülse 36 ist geringer als der Abstand zwischen den beiden Druckringen 29, 30 in der in Figur 7 gezeigten Ausgangsstellung des ersten Stellelements 22 und des zweiten Stellelements 23 zueinander.

Wird nun zum Zusammenfahren des Stabilisators 16 eine Kraft auf das zweite Stellelement 23 entlang der Längsachse Y in Richtung zum ersten Verbindungselement 24 ausgeübt, stützt sich das zweite Stellelement 23 über die Schulter 33 gegen den vorderen Druckring 30 ab. Das zweite Stellelement 23 drückt den vorderen Druckring 30 gegen die Federkraft der Druckfeder 35 auf dem Führungsabschnitt 28 des ersten Stellelements 22 in Richtung zum hinteren Druckring 29. Hierbei verschiebt der vordere Druckring 30 die Hülse 36 bis sich der vordere Druckring 30 über die Hülse 36 gegen den hinteren Druckring 29 abstützt. Die Kraft wird vom hinteren Druckring 29 über die Schulter 31 gegen das erste Stellelement 22 abgestützt. Diese Stellung des Stabilisators 16 ist in Figur 8 gezeigt und entspricht einer maximal zusammengefahrenen Stellung des ersten Stellelements 22 und des zweiten Stellelements 23 zueinander.

Darüber hinaus kann der Stabilisator 16 ausgehend von der Ausgangsstellung gemäß Figur 7 weiter auseinandergefahrenen werden, indem eine Kraft auf das zweite Stellelement 23 entlang der Längsachse Y weg von dem ersten Verbindungselement 24 ausgeübt wird. Hierbei stützt sich das zweite Stellelement 23 über den Sicherungsring 34 gegen den hinteren Druckring 29 ab und verschiebt diesen auf dem Führungsabschnitt 28 des ersten Stellelements 22 in Richtung zum vorderen Druckring 30, bis der hintere Druckring 29 sich über die Hülse 36 gegen den vorderen Druckring 30 abstützt. Der vordere Druckring 30 stützt sich wiederum über den Sicherungsring 32 am Führungsabschnitt 28 des ersten Stellelements 22 axial ab. Diese Stellung entspricht einer maximal auseinandergefahrenen Stellung (nicht dargestellt) des ersten Stellelements 22 und des zweiten Stellelements 23 zueinander.

Dadurch, dass der hintere Druckring 29 und der vordere Druckring 30 durch die Druckfeder 35 gegeneinander druckbeaufschlagt sind, wird der Stabilisator 16 stets in die Ausgangsstellung gemäß Figur 7 gedrückt, sofern keine äußeren Kräfte auf den Stabilisator 16 einwirken.

Um den Stabilisator 16 gegen eine Längenverstellung bzw. ein Verstellen des ersten Stellelements 22 und des zweiten Stellelements 23 zueinander zu sperren, weist der Stabilisator 16 eine Sperrklinke 38 auf, die um eine Klinkenachse K schwenkbar mit dem ersten Stellelement 22 verbunden ist. Die Klinkenachse K verläuft quer zur Längsachse Y und schneidet diese zum Beispiel in einem rechten Winkel oder kreuzt diese mit Abstand.

Das zweite Stellelement 23 weist ein Sperrelement 39 in Form eines nach außen vorstehenden umlaufenden Kragens auf. Die Sperrklinke 38 umfasst zwei Wangen 40, 41, die in einer Sperrstellung der Sperrklinke 38 das erste Stellelement 22 und das zweite Stellelement 23 teilweise zwischen sich aufnehmen. Ferner weisen die Wangen 40, 41 jeweils eine Sperrausnehmung 42, 43 auf, die einander zugewandt sind und die in der Sperrstellung der Sperrklinke 38 das Sperrelement 39 derart aufnehmen, dass das Sperrelement 39 in beiden Verstellrichtungen des zweiten Stellelements 23 relativ zum ersten Stellelement 22 abgestützt ist. Ein Verstellen des zweiten Stellelements 23 gegenüber dem ersten Stellelement 22 ist somit verhindert.

In einer Schwimmstellung ist das Sperrelement 39 nicht in den Sperrausnehmungen 42, 43 der Sperrklinke 38 aufgenommen, sodass das zweite Stellelement 23 relativ zum ersten Stellelement 22 frei bewegt werden kann.

Grundsätzlich kann die Sperrklinke 38 auch an dem zweiten Stellelement 23 schwenkbar befestigt sein, wobei dann das Sperrelement 39 an dem ersten Stellelement 22 angeordnet ist.

Um den Stabilisator 16 an unterschiedlich breite Anbaugeräte anpassen zu können, ist die Länge des Stabilisators 16 unabhängig von der Stellung der beiden Stellelemente 22, 23 zueinander veränderbar. Hierzu ist, wie bereits vorstehend erläutert, das zweite Verbindungselement 25 gegenüber dem zweiten Stellelement 23 in seiner axialen Position verstellbar. Das zweite Verbindungselement 25 weist hierzu einen Schaft 44 auf, der mit einem Außengewinde 45 versehen ist. Das zweite Stellelement 23 weist eine Verstellaufnahme 46 auf, die koaxial zur Längsachse Y angeordnet ist und mit einem Innengewinde 47 versehen ist. Der Schaft 44 ist mit seinem Außengewinde 45 koaxial zur Längsachse Y in das Innengewinde 47 der Verstellaufnahme 46 eingeschraubt. Die axiale Position des zweiten Verbindungselements 25 und damit der zweiten Anschlussmittel 20 relativ zu den ersten Anschlussmitteln 16 kann dadurch eingestellt werden, dass der Schaft 44 unterschiedlich tief in die Verstellaufnahme 46 eingeschraubt wird.

Die Verstellaufnahme 46 geht in die Führungsaufnahme 26 des zweiten Stellelements 23 über. Je nachdem wie tief der Schaft 44 in die Verstellaufnahme 46 eingeschraubt ist, ragt der Schaft 44 bis in die Führungsaufnahme 26 hinein, wie dies zum Beispiel in der Figur 9 ersichtlich ist. In der maximal zusammengefahrenen Stellung des Stabilisators 16 stößt somit der Führungsabschnitt 28 des ersten Stellelements 22 axial gegen den Schaft 44 des zweiten Verbindungselements 25 an und stützt sich axial gegen diesen ab. Ist der Schaft 44 hingegen nicht so weit in die Verstellaufnahme 46 eingeschraubt, dass dieser in die Führungsaufnahme 26 hineinragt, stützt sich in der maximal zusammengefahrenen Stellung des Stabilisators 16 der Führungsabschnitt 28 des ersten Stellelements 22 gegen eine umlaufende Schulter 48 des Grundkörpers 27 des zweiten Stellelements 23 axial ab (wie dies in Figur 8 dargestellt ist). Somit kann in diesem Fall der Stabilisator 16 weiter zusammengefahrenen werden, als dies der Fall ist, wenn der Schaft 44 des zweiten Verbindungselements 25 in die Führungsaufnahme 26 hineinragt. Der freie Schwimmweg des Stabilisators kann somit verändert werden.

Hierbei ist zu beachten, dass die maximal zusammengefahrene Stellung des Stabilisators 16 von der Position des zweiten Verbindungselements 25 am zweiten Stellelement 23 abhängig ist.

Zum Verstellen des zweiten Verbindungselements 25 relativ zum zweiten Stellelement 23 wird, im montierten Zustand des Stabilisators 16 am Traktor und an der Anbauvorrichtung, das zweite Stellelement 23 um die Längsachse Y gedreht. Da das zweite Verbindungselement 25 über die zweiten Anschlussmittel 20 drehfest gegenüber dem Unterlenker der Anbauvorrichtung abgestützt ist, wird durch Drehen des zweiten Stellelements 23 der Schaft 44 in die Verstellaufnahme 46 oder aus dieser herausgeschraubt.

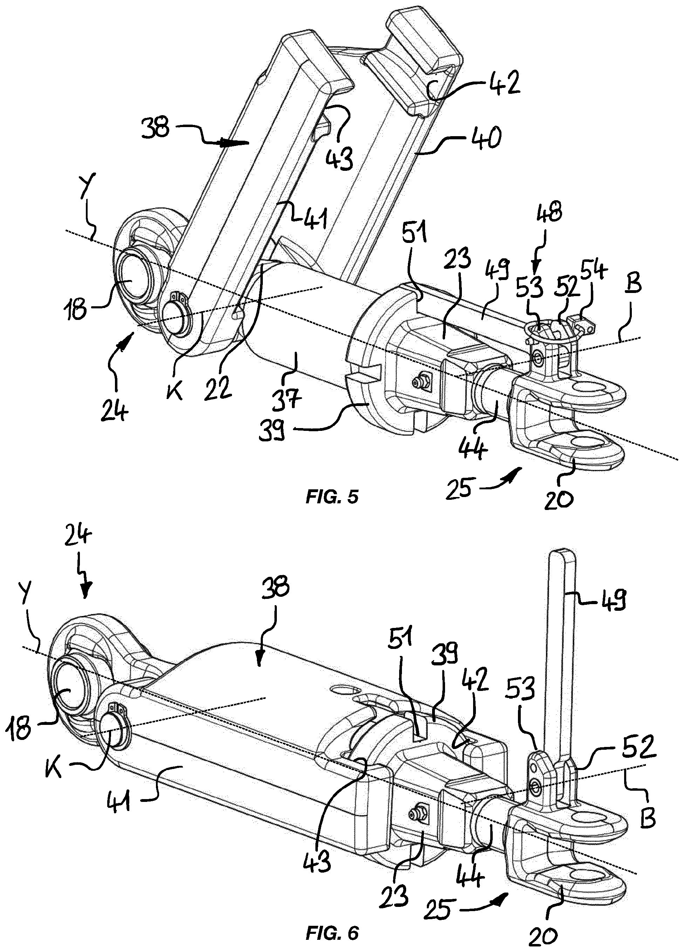

Um ein unbeabsichtigtes Verdrehen des zweiten Stellelements 23 und damit ein unbeabsichtigtes Verstellen der axialen Position des zweiten Verbindungselements 25 zu verhindern, ist eine Arretiereinrichtung 48 vorgesehen. Die Arretiereinrichtung 48 umfasst einen Bügel 49, der zwischen einer in Figur 5 dargestellten Arretierstellung und einer in Figur 6 dargestellten Freigabestellung verschwenkbar am zweiten Verbindungselement 25 befestigt ist. Der Bügel 49 ist hierbei um eine Bügelachse B schwenkbar, die parallel zur Klinkenachse K angeordnet ist. Grundsätzlich kann der Bügel 49 auch anderweitig verstellbar sein, zum Beispiel parallel zur Längsachse Y verschiebbar sein.

Die Arretiereinrichtung 48 umfasst ferner ein Arretierelement in Form eines radial nach außen vorstehenden Kragens koaxial zur Längsachse Y. Im vorliegenden Fall ist das Sperrelement 39 zum Sperren der axialen Bewegung der beiden Stellelemente zueinander gleichzeitig auch das Arretierelement.

Es ist jedoch auch denkbar, dass das Arretierelement separat von dem Sperrelement 39 ausgebildet ist. Das Arretierelement kann zum Beispiel zwischen dem Sperrelement 39 und dem zweiten Verbindungselement 25 am ersten Stellelement 23 in Form eines radial vorstehenden umlaufenden Kragens, vergleichbar zum Sperrelement 39, ausgebildet sein. Es ist auch denkbar, dass mehrere über den Umfang verteilt angeordnete Arretierelemente am zweiten Stellelement 23 vorgesehen sind. Ebenso können mehrere Sperrelemente über den Umfang verteilt am zweiten Stellelement 23 angeordnet sein, die gleichzeitig die Arretierelemente bilden.

In dem Arretierelement (Sperrelement) 39 sind über den Umfang verteilt Schlitze 51 angeordnet, in die, je nach Drehstellung des zweiten Stellelements 23 zum zweiten Verbindungselement 25, der Bügel 49 eintauchen kann und das zweite Stellelement 23 und das zweite Verbindungselement 25 drehfest miteinander verbindet bzw. diese drehfest gegeneinander abstützt.

Der Bügel 49 ist zwischen zwei Laschen 52, 53, die integraler Bestandteil des zweiten Verbindungselements 25 sind, schwenkbar gehalten. Um den Bügel 49 in seiner Arretierstellung zu fixieren, ist ein Sperrstift 54 an den beiden Laschen 52, 53 fixierbar.

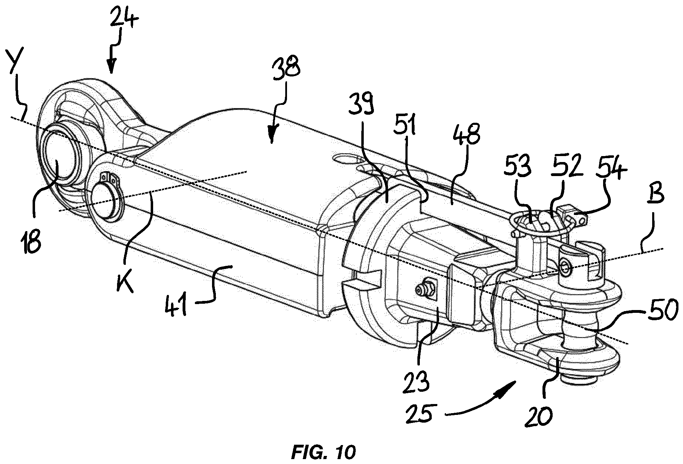

Figur 10 zeigt eine weitere Ausführungsform eines Stabilisators, wobei übereinstimmende Elemente mit denselben Bezugszeichen versehen sind, wie bei der Ausführungsform gemäß der Figuren 3 bis 9 und dort beschrieben sind. Im Unterschied zu dem Stabilisator gemäß der Figuren 3 bis 9 ist der Bügel 49 an einem Befestigungsbolzen 50 schwenkbar befestigt, wobei der Befestigungsbolzen 50 Bestandteil der zweiten Anschlussmittel 20 an dem zweiten Verbindungselement 25 ist und zur Fixierung des Stabilisators am Unterlenker dient. Der Bügel 49 ist in seiner Arretierstellung zwischen den beiden Laschen 52, 53 angeordnet und taucht in den Schlitz 51 des Arretierelements (Sperrelement) 39 ein und ist durch den Sperrstift 54 an den beiden Laschen 52, 23 fixiert. Die Sperrklinke 38 ist zudem derart ausgebildet, dass der Stabilisator 16 nur gegen ein Zusammenfahren, also auf Druck und nicht auf Zug, gesperrt werden kann. Die Sperrklinke ist hierfür ohne Sperrausnehmung ausgebildet. In der Sperrstellung der Sperrklinke 38 ist das Sperrelement 39 lediglich stirnseitig gegen die Sperrklinke 38 axial abgestützt. Im Übrigen ist der Stabilisator 16 gemäß Figur 10 identisch aufgebaut zu dem Stabilisator gemäß der Figuren 3 bis 9.

### Bezugszeichenliste

- 1: Traktor
- 2: Dreipunktanbauvorrichtung
- 3: Unterlenker
- 4: Unterlenker
- 5: Oberlenker
- 6: freies Ende
- 7: freies Ende
- 8: freies Ende
- 9: Kupplungshaken
- 10: Kupplungshaken
- 11: Kupplungshaken
- 12: Hubstrebe
- 13: Hubarm
- 14: Befestigungsstelle
- 15: Befestigungsstelle
- 16: Stabilisator
- 17: Stabilisator
- 18: erste Anschlussmittel
- 19: erste Anschlussmittel
- 20: zweite Anschlussmittel
- 21: zweite Anschlussmittel
- 22: erstes Stellelement
- 23: zweites Stellelement
- 24: erstes Verbindungselement
- 25: zweites Verbindungselement
- 26: Führungsaufnahme
- 27: Grundkörper
- 28: Führungsabschnitt
- 29: hinterer Druckring
- 30: vorderer Druckring
- 31: Schulter
- 32: Sicherungsring
- 33: Schulter
- 34: Sicherungsring
- 35: Druckfeder
- 36: Hülse
- 37: Rohr
- 38: Sperrklinke
- 39: Sperrelement/Arretierelement
- 40: Wange
- 41: Wange
- 42: Sperrausnehmung
- 43: Sperrausnehmung
- 44: Schaft
- 45: Außengewinde
- 46: Verstellaufnahme
- 47: Innengewinde
- 48: Arretiereinrichtung
- 49: Bügel
- 50: Befestigungsbolzen
- 51: Schlitz
- 52: Lasche
- 53: Lasche
- 54: Sperrstift

- A: Spreizmaß
- B: Bügelachse
- K: Klinkenachse
- L1, L1': Länge
- L2, L2': Länge
- M: Traktorlängsachse
- S: Schwenkachse
- X: Seitenverschiebung
- Y: Längsachse

## Patentansprüche

1. Stabilisator (16) für eine Anbauvorrichtung (2) eines Fahrzeugs (1) umfassend:
ein erstes Stellelement (22) und ein zweites Stellelement (23), die zur Längenveränderung des Stabilisators (16) entlang einer Längsachse (Y) verstellbar zueinander geführt sind,
ein erstes Verbindungselement (24) am ersten Stellelement (22) zum Abstützen des Stabilisators (16) gegen das Fahrzeug (1), und
ein zweites Verbindungselement (25) zum Abstützen des Stabilisators (16) gegen ein Element der Anbauvorrichtung (2), das zur Längeneinstellung des zweiten Stellelements (23) axial verstellbar am zweiten Stellelement (23) gehalten und zumindest in einer verlängernden Position und in einer verkürzenden Position am zweiten Stellelement (23) fixierbar ist,
**dadurch gekennzeichnet,**
**dass**, in einer maximal zusammengefahrenen Stellung des ersten Stellelements (22) und des zweiten Stellelements (23) zueinander und in der verlängernden Position des zweiten Verbindungselements (25), das erste Stellelement (22) gegen das zweite Verbindungselement (25) oder das zweite Stellelement (23) axial abgestützt ist, und
**dass**, in der maximal zusammengefahrenen Stellung des ersten Stellelements (22) und des zweiten Stellelements (23) zueinander und in der verkürzenden Position des zweiten Verbindungselements (25), das erste Stellelement (22) gegen das zweite Verbindungselement (25) axial abgestützt ist.

2. Stabilisator (16) nach Anspruch 1,
**dadurch gekennzeichnet,**
**dass** das zweite Stellelement (23) eine Führungsaufnahme (26) aufweist, in der ein Führungsabschnitt (28) des ersten Stellelements (22) axial verstellbar geführt ist.

3. Stabilisator (16) nach Anspruch 2,
**dadurch gekennzeichnet,**
**dass** das zweite Stellelement (23) eine Verstellaufnahme (46) aufweist, in der ein Schaft (44) des zweiten Verbindungselements (25) axial verstellbar aufgenommen ist, wobei die Verstellaufnahme (46) in die Führungsaufnahme (26) übergeht.

4. Stabilisator (16) nach Anspruch 3,
**dadurch gekennzeichnet,**
**dass** der Schaft (44) des zweiten Verbindungselements (25) in der verkürzenden Position des zweiten Verbindungselements (25) in die Führungsaufnahme (26) hineinragt, wobei in der maximal zusammengefahrenen Stellung des ersten Stellelements (22) und des zweiten Stellelements (23) zueinander der Führungsabschnitt (28) des ersten Stellelements (22) axial gegen den Schaft (44) des zweiten Verbindungselements (25) abgestützt ist.

5. Stabilisator (16) nach einem der Ansprüche 1 bis 4,
**dadurch gekennzeichnet,**
**dass** das erste Stellelement (22) und das zweite Stellelement (23) ausgehend von einer Ausgangsstellung in Richtung zur maximal zusammengefahrenen Stellung entgegen der Kraft einer Feder (35) verstellbar sind.

6. Stabilisator (16) nach einem der Ansprüche 1 bis 5,
**dadurch gekennzeichnet,**
**dass** das erste Stellelement (22) und das zweite Stellelement (23) ausgehend von einer Ausgangsstellung in Richtung zu einer maximal auseinandergefahrenen Stellung entgegen der Kraft einer Feder (35) verstellbar sind.

7. Stabilisator (16) nach einem der Ansprüche 1 bis 6,
**dadurch gekennzeichnet,**
**dass** das zweite Verbindungselement (25) zur Längenveränderung des zweiten Stellelements (23) mit dem zweiten Stellelement (23) über eine Schraubverbindung um die Längsachse (Y) drehbar verbunden ist.

8. Stabilisator (16) nach Anspruch 7,
**dadurch gekennzeichnet,**
**dass** der Stabilisator (16) ferner eine Arretiereinrichtung (48) aufweist, die mit dem zweiten Stellelement (23) und dem zweiten Verbindungselement (25) verbunden ist, wobei in einer Arretierstellung der Arretiereinrichtung (48) das zweite Stellelement (23) und das zweite Verbindungselement (25) drehfest miteinander verbunden sind.

9. Stabilisator (16) nach Anspruch 8,
**dadurch gekennzeichnet,**
**dass** die Arretiereinrichtung (48) einen Bügel (49) aufweist, der verstellbar, insbesondere schwenkbar, mit einem der beiden Elemente der Gruppe bestehend aus zweitem Stellelement (23) und zweitem Verbindungselement (25) schwenkbar verbunden ist,
**dass** die Arretiereinrichtung (48) ein Arretierelement (39) aufweist, das an dem anderen der beiden Elemente der Gruppe bestehend aus zweitem Stellelement (23) und zweitem Verbindungselement (25) befestigt ist, und
**dass** in der Arretierstellung der Arretiereinrichtung (48) der Bügel (49), im Drehsinn um die Längsachse (Y), gegen das Arretierelement (39) abgestützt ist.

10. Stabilisator (16) nach Anspruch 9,
**dadurch gekennzeichnet,**
**dass** das Arretierelement (39) einen Schlitz (51) aufweist, und
**dass** der Bügel (49) in der Arretierstellung der Arretiereinrichtung (48) parallel zur Längsachse (Y) ausgerichtet ist und in den Schlitz (51) des Arretierelements (39) eingreift.

11. Stabilisator (16) nach einem der Ansprüche 8 bis 10,
**dadurch gekennzeichnet,**
**dass** der Stabilisator (16) ferner eine Sperrklinke (38) aufweist, die mit einem der beiden Elemente der Gruppe bestehend aus erstem Stellelement (22) und zweitem Stellelement (23) verstellbar verbunden ist,
**dass** der Stabilisator (16) ferner zumindest ein Sperrelement aufweist, das mit dem anderen der beiden Elemente der Gruppe bestehend aus erstem Stellelement (22) und zweitem Stellelement (23) verbunden ist, und
**dass** die Sperrklinke (38) in eine Sperrstellung überführbar ist, in der das erste Stellelement (22) und das zweite Stellelement (23) zumindest in einer axialen Richtung der Längsachse (Y) gegeneinander abgestützt sind.

12. Stabilisator (16) nach Anspruch 11,
**dadurch gekennzeichnet,**
**dass** das zumindest eine Sperrelement (39) das Arretierelement ist.

13. Stabilisator (16) nach einem der Ansprüche 8 bis 12,
**dadurch gekennzeichnet,**
**dass** der Bügel (49) starr oder elastisch federnd ausgebildet ist.

14. Stabilisator (16) nach einem der Ansprüche 1 bis 13,
**dadurch gekennzeichnet,**
**dass** das erste Stellelement (22) einen Hydraulikzylinder umfasst.

15. Stabilisator (16) nach Anspruch 14,
**dadurch gekennzeichnet,**
**dass** der Hydraulikzylinder ein einfach wirkender Hydraulikzylinder ist, der in einem Ausfahrsinn mit Hydraulikdruck beaufschlagbar ist.

## Claims

1. Stabilizer (16) for an attachment device (2) of a vehicle (1) comprising:
a first adjusting element (22) and a second adjusting element (23) which are guided adjustably relative to one another along a longitudinal axis (Y) in order to vary the length of the stabilizer (16),
a first connecting element (24) on the first adjusting element (22) for supporting the stabilizer (16) against the vehicle (1), and
a second connecting element (25) for supporting the stabilizer (16) against an element of the attachment device (2), which second connecting element (25) is held on the second adjusting element (23) in an axially adjustable manner for adjusting the length of the second adjusting element (23) and can be fixed on the second adjusting element (23) at least in an extending position and in a shortening position,
**characterized in**
**that**, in a maximally retracted position of the first adjusting element (22) and the second adjusting element (23) relative to each other and in the extending position of the second connecting element (25), the first adjusting element (22) is axially supported against the second connecting element (25) or the second adjusting element (23), and
**that**, in the maximally retracted position of the first adjusting element (22) and the second adjusting element (23) relative to each other and in the shortening position of the second connecting element (25), the first adjusting element (22) is axially supported against the second connecting element (25).

2. Stabilizer (16) according to claim 1,
**characterized in**
**that** the second adjusting element (23) has a guide receptacle (26), in which a guide portion (28) of the first adjusting element (22) is guided in an axially adjustable manner.

3. Stabilizer (16) according to claim 2,
**characterized in**
**that** the second adjusting element (23) has an adjusting receptacle (46) in which a shank (44) of the second connecting element (25) is received in an axially adjustable manner, the adjusting receptacle (46) merging into the guide receptacle (26).

4. Stabilizer (16) according to claim 3,
**characterized in**
**that** the shank (44) of the second connecting element (25) projects into the guide receptacle (26) in the shortening position of the second connecting element (25), the guide portion (28) of the first adjusting element (22) being supported axially against the shank (44) of the second connecting element (25) in the maximum retracted position of the first adjusting element (22) and of the second adjusting element (23) with respect to one another.

5. Stabilizer (16) according to one of claims 1 to 4,
**characterized in**
**that** the first adjusting element (22) and the second adjusting element (23) can be adjusted, starting from an initial position, in the direction towards the maximum retracted position against the force of a spring (35).

6. Stabilizer (16) according to one of claims 1 to 5,
**characterized in**
**that** the first adjusting element (22) and the second adjusting element (23) can be adjusted, starting from an initial position, in the direction towards a maximally extended position against the force of a spring (35).

7. Stabilizer (16) according to one of claims 1 to 6,
**characterized in**
**that** the second connecting element (25) for adjusting the length of the second adjusting element (23) is connected to the second adjusting element (23) such that it can be rotated about the longitudinal axis (Y) via a screw connection.

8. Stabilizer (16) according to claim 7,
**characterized in**
**that** the stabilizer (16) further has a locking device (48), which is connected to the second adjusting element (23) and the second connecting element (25), the second adjusting element (23) and the second connecting element (25) being connected to one another in a rotationally fixed manner in a locking position of the locking device (48).

9. Stabilizer (16) according to claim 8,
**characterized in**
**that** the locking device (48) has a bracket (49), which is adjustably, in particular pivotably, connected pivotably to one of the two elements of the group comprising the second adjusting element (23) and the second connecting element (25), that the locking device (48) has a locking element (39), which is fastened to the other of the two elements of the group comprising the second adjusting element (23) and the second connecting element (25), and
**that**, in the locking position of the locking device (48), the bracket (49) is supported against the locking element (39) in the direction of rotation about the longitudinal axis (Y).

10. Stabilizer (16) according to claim 9,
**characterized in**
**that** the locking element (39) has a slot (51), and
**that**, in the locking position of the locking device (48), the bracket (49) is aligned parallel to the longitudinal axis (Y) and engages in the slot (51) of the locking element (39).

11. Stabilizer (16) according to one of claims 8 to 10,
**characterized in**
**that** the stabilizer (16) further comprises a latch (38) adjustably connected to one of the two elements of the group consisting of the first adjusting element (22) and the second adjusting element (23),
**that** the stabilizer (16) further comprises at least one latching element, which is connected to the other of the two elements of the group consisting of the first adjusting element (22) and the second adjusting element (23), and
**that** the latch (38) can be transferred into a latching position, in which the first adjusting element (22) and the second adjusting element (23) are supported against one another at least in one axial direction of the longitudinal axis (Y).

12. Stabilizer (16) according to claim 11,
**characterized in**
**that** the at least one latching element (39) is the locking element.

13. Stabilizer (16) according to one of claims 8 to 12,
**characterized in**
**that** the bracket (49) is rigid or elastically resilient.

14. Stabilizer (16) according to one of claims 1 to 13,
**characterized in**
**that** the first adjusting element (22) comprises a hydraulic cylinder.

15. Stabilizer (16) according to claim 14,
**characterized in**
**that** the hydraulic cylinder is a single-acting hydraulic cylinder to which hydraulic pressure can be applied in an extension direction.

## Revendications

1. Stabilisateur (16) pour un dispositif d'attelage (2) d'un véhicule (1), comprenant : un premier élément de réglage (22) et un deuxième élément de réglage (23), qui pour faire varier la longueur du stabilisateur (16) sont guidés de manière ajustable l'un par rapport à l'autre le long d'un axe longitudinal (Y),
un premier élément d'assemblage (24) sur le premier élément de réglage (22), destiné à soutenir le stabilisateur (16) contre le véhicule (1), et
un deuxième élément d'assemblage (25), destiné à soutenir le stabilisateur (16) contre un élément du dispositif d'attelage (2), qui pour le réglage de la longueur du deuxième élément de réglage (23) est maintenu en étant ajustable en direction axiale sur le deuxième élément de réglage (23) et qui peut se fixer au moins dans une position d'allongement et dans une position de raccourcissement sur le deuxième élément de réglage (23),
**caractérisé**
**en ce que** dans une position rapprochée au maximum du premier élément de réglage (22) et du deuxième élément de réglage (23) l'un contre l'autre et dans la position de rallongement du deuxième élément d'assemblage (25), le premier élément de réglage (22) est soutenu contre le deuxième élément d'assemblage (25) ou le deuxième élément de réglage (23) est soutenu en direction axiale, et
**en ce que** dans une position rapprochée au maximum du premier élément de réglage (22) et du deuxième élément de réglage (23) l'un contre l'autre et dans la position de raccourcissement du deuxième élément d'assemblage (25), le premier élément de réglage (22) est soutenu en direction axiale contre le deuxième élément d'assemblage (25).

2. Stabilisateur (16) selon la revendication 1,
**caractérisé**
**en ce que** le deuxième élément de réglage (23) comporte un logement de guidage (26), dans lequel un segment de guidage (28) du premier élément de réglage (22) est guidé en étant ajustable en direction axiale.

3. Stabilisateur (16) selon la revendication 2,
**caractérisé**
**en ce que** le deuxième élément de réglage (23) comporte un logement d'ajustage (46), dans lequel une tige (44) du deuxième élément d'assemblage (25) est logée en étant ajustable en direction axiale, le logement d'ajustage (46) passant dans le logement de guidage (26) .

4. Stabilisateur (16) selon la revendication 3,
**caractérisé**
**en ce que** dans la position de raccourcissement du deuxième élément d'assemblage (25), la tige (44) du deuxième élément d'assemblage (25) saillit à l'intérieur du logement de guidage (26), dans la position rapprochée au maximum du premier élément de réglage (22) et du deuxième élément de réglage (23) l'un contre l'autre, le segment de guidage (28) du premier élément de réglage (22) étant soutenu en direction axiale contre la tige (44) du deuxième élément d'assemblage (25).

5. Stabilisateur (16) selon l'une quelconque des revendications 1 à 4,
**caractérisé**
**en ce qu'**en partant d'une position de départ, le premier élément de réglage (22) et le deuxième élément de réglage (23) sont ajustables en direction de la position rapprochée au maximum, à l'encontre de la force d'un ressort (35).

6. Stabilisateur (16) selon l'une quelconque des revendications 1 à 5,
**caractérisé**
**en ce qu'**en partant d'une position de départ, le premier élément de réglage (22) et le deuxième élément de réglage (23) sont ajustables en direction d'une position écartée au maximum, à l'encontre de la force d'un ressort (35).

7. Stabilisateur (16) selon l'une quelconque des revendications 1 à 6,
**caractérisé**
**en ce que** pour faire varier la longueur du deuxième élément de réglage (23), le deuxième élément d'assemblage (25) est assemblé avec le deuxième élément de réglage (23) par l'intermédiaire d'un raccord vissé, en rotation autour de l'axe longitudinal (Y).

8. Stabilisateur (16) selon la revendication 7,
**caractérisé**
**en ce que** le stabilisateur (16) comporte par ailleurs un système d'arrêt (48), qui est assemblé avec le deuxième élément de réglage (23) et avec le deuxième élément d'assemblage (25), dans une position d'arrêt du système d'arrêt (48), le deuxième élément de réglage (23) et le deuxième élément d'assemblage (25) étant assemblés l'un avec l'autre de manière solidaire en rotation.

9. Stabilisateur (16) selon la revendication 8, **caractérisé**
**en ce que** le système d'arrêt (48) comporte un étrier (49) qui est assemblé de manière ajustable, notamment en pivotement avec l'un des deux éléments du groupe composé du deuxième élément de réglage (23) et du deuxième élément d'assemblage (25),
**en ce que** le système d'arrêt (48) comporte un élément d'arrêt (39) qui est fixé sur l'autre des deux éléments du groupe composé du deuxième élément de réglage (23) et du deuxième élément d'assemblage (25), et
**en ce que** dans la position d'arrêt du système d'arrêt (48), l'étrier (49), est soutenu en position horaire autour de l'axe longitudinal (Y) contre l'élément d'arrêt (39) .

10. Stabilisateur (16) selon la revendication 9,
**caractérisé**
**en ce que** l'élément d'arrêt (39) comporte une fente (51), et
**en ce que** dans la position d'arrêt du système d'arrêt (48), l'étrier (49) est orienté à la parallèle de l'axe longitudinal (Y) et s'engage dans la fente (51) de l'élément d'arrêt (39).

11. Stabilisateur (16) selon l'une quelconque des revendications 8 à 10,
**caractérisé**
**en ce que** le stabilisateur (16) comporte par ailleurs un cliquet (38), qui est assemblé de manière ajustable avec l'un des deux éléments du groupe composé du premier élément de réglage (22) et du deuxième élément de réglage (23),
**en ce que** le stabilisateur (16) comporte par ailleurs au moins un élément de blocage qui est assemblé avec l'autre des deux éléments du groupe composé du premier élément de réglage (22) et du deuxième élément de réglage (23), et
**en ce que** le cliquet (38) peut être ramené dans une position de blocage, dans laquelle le premier élément de réglage (22) et le deuxième élément de réglage (23) sont soutenus l'un contre l'autre au moins dans une direction axiale de l'axe longitudinal (Y).

12. Stabilisateur (16) selon la revendication 11,
**caractérisé**
**en ce que** l'au moins un élément de blocage (39) est l'élément d'arrêt.

13. Stabilisateur (16) selon l'une quelconque des revendications 8 à 12,
**caractérisé**
**en ce que** l'étrier (49) est conçu en étant rigide ou à résilience élastique.

14. Stabilisateur (16) selon l'une quelconque des revendications 1 à 13,
**caractérisé**
**en ce que** le premier élément de réglage (22) est un vérin hydraulique.

15. Stabilisateur (16) selon la revendication 14,
**caractérisé**
**en ce que** le vérin hydraulique est un vérin hydraulique à action simple qui est susceptible d'être soumis à une pression hydraulique dans un sens de sortie.
